Europäisches Patentamt

European Patent Office

Office européen des brevets

(19)

(11) Veröffentlichungsnummer: **0 335 168 B1**

(12) **EUROPÄISCHE PATENTSCHRIFT**

(45) Veröffentlichungstag der Patentschrift: **19.01.94**

(51) Int. Cl.⁵: **F02D 19/08**

(21) Anmeldenummer: **89104566.8**

(22) Anmeldetag: **15.03.89**

(54) **Verfahren zum Betrieb einer Brennkraftmaschine.**

(30) Priorität: **30.03.88 DE 3810808**

(43) Veröffentlichungstag der Anmeldung:
**04.10.89 Patentblatt 89/40**

(45) Bekanntmachung des Hinweises auf die
Patenterteilung:
**19.01.94 Patentblatt 94/03**

(84) Benannte Vertragsstaaten:
**DE FR GB IT SE**

(56) Entgegenhaltungen:
**FR-A- 1 497 457
FR-A- 2 409 389
GB-A- 2 136 118
US-A- 3 724 474
US-A- 4 706 630**

**PATENT ABSTRACTS OF JAPAN vol. 5, no.
183 (M-97)(855) 21 November 1981, & JP-A-56
104131 (HITACHI) 19 August 1981**

**PATENT ABSTRACTS OF JAPAN vol. 11, no.
310 (M-630)(2757) 09 Oktober 1987, & JP-A-62
96743 (TOYOTA) 06 Mai 1987**

(73) Patentinhaber: **FEV Motorentechnik GmbH &
Co. KG
Neuenhofstrasse 181
D-52078 Aachen(DE)**

(72) Erfinder: **Schmitz, Günter, Dr.-Ing.
Zehnthofweg 31
D-5100 Aachen(DE)**
Erfinder: **Kutz, Hans-Jürgen, Dipl.-Ing.
Josef-von-Görres-Strasse 49
D-5100 Aachen(DE)**

(74) Vertreter: **Langmaack, Jürgen, Dipl.-Ing. et al
Patentanwälte
Maxton . Maxton . Langmaack
Postfach 51 08 06
D-50944 Köln (DE)**

EP 0 335 168 B1

PATENT ABSTRACTS OF JAPAN vol. 6, no. 161 (M-151)(1039) 24 August 1982, & JP-A-57 76231 (TOYOTA) 13 Mai 1982

PATENT ABSTRACTS OF JAPAN vol. 11, no. 295 (M-626)(2742) 24 September 1987, & JP-A-62 87629 (TOYOTA) 22 April 1987

PATENT ABSTRACTS OF JAPAN vol. 5, no. 172 (M-95)(844) 31 Oktober 1981, & JP-A-56 98540 (HITACHI) 08 August 1981

PATENT ABSTRACTS OF JAPAN vol. 5, no. 187 (M-98)(859) 26 November 1981, & JP-A-56 106038 (HITACHI) 24 August 1981

## Beschreibung

Die Erfindung bezieht sich auf ein Verfahren zum Betrieb einer Brennkraftmaschine, die mit einem nachfolgend als Alkohol bezeichneten Alternativkraftstoff enthaltenden Kraftstoff herkömmlicher Art angetrieben wird, dessen Alkoholanteil zum Zweck der Einstellung der jeweils zuzuführenden Kraftstoffmenge messend verfolgt wird, bei dem die Messung des Alkoholanteils des Zugeführten Kraftstoffs zur Vorsteuerung der zugeführten Kraftstoffmenge dient, während die Feinregulierung des Luftverhältnisses über eine Lambdaregelung bekannter Art erfolgt, und bei der der Alkoholgehalt des Kraftstoffs durch Messung der Kapazität einer in einer Meßzelle untergebrachten Kraftstoffmenge in einer Schaltung bestimmt wird.

In Anbetracht der langfristig nur in begrenztem Umfang verfügbaren Reserven an fossiler Energie, insbesondere der aus Rohöl gewonnenen Kraftstoffe, und in Anbetracht der steigenden Anforderungen an den Umweltschutz, werden diesen Kraftstoffen in zunehmendem Maße Alternativkraftstoffe, insbesondere Methyl- oder Äthylalkohol, zugemischt. Dabei soll ein beliebiges Tanken sowohl von Reinkraftstoffen als auch von Mischkraftstoffen möglich sein. Bei höheren Alkoholanteilen ist dabei die Kenntnis des Mischungsverhältnisses erforderlich, um eine optimale Arbeitsweise der Brennkraftmaschine zu erreichen und dabei insbesondere eine genaue, den Betriebsverhältnissen angepaßte Kraftstoffzumessung zu ermöglichen. Besondere Probleme bereitet dabei die laufende Feststellung des Alkoholgehaltes des der Brennkraftmaschine im Betrieb laufend zugeführten Kraftstoffs bei Fahrzeugmotoren, bei denen durch das beliebige Tanken der Kraftstoffarten jede mögliche Mischung erreicht werden kann.

Die bekannten optischen Verfahren sind zu diesem Zweck kaum geeignet, da sie meist Grenzflächenefekte zur Bestimmung des Brechungsindexes ausnutzen, aus dem dann auf den Alkoholanteil geschlossen werden kann. Abgesehen von der Schwierigkeit der Auswertung bei Fahrzeugmotoren ist ein Nachteil dieses Verfahrens auch, daß die messend zu beobachtende Mischung eine hohe Homogenität aufweisen muß, die insbesondere auch an der Grenzfläche vorhanden sein muß. Mit diesem Verfahren wurden nicht die erforderlichen Genauigkeiten en erreicht.

In der Schrift "Proceedings of the Fourth International Symposium on Alcohol Fuels Technology", Sao Paulo, Brasilien, vom 05.10.1980, wird die Möglichkeit der Feststellung des Alkoholgehaltes von Kraftstoffen durch Dielektrizitätsmessungen beschrieben. Aufgrund der Einflüsse von Temperatur und Leitwert (hervorgerufen durch Wasseranteile oder andere Verschmutzungen im Kraftstoff) wurde das Verfahren jedoch verworfen, da eine für Verbrennungsmotoren geeignete, zuverlässige Messung nicht durchgeführt werden konnte.

In JP-A-5698540 ist eine Verfahren zum Betrieb einer Brennkraftmaschine beschrieben, die mit einem nachfolgend als Alkohol bezeichneten Alternativkraftstoff enthaltenen Kraftstoff herkömmlicher Art angetrieben wird, dessen Alkoholanteil zum Zweck der Einstellung der jeweils zuzuführenden Kraftstoffmenge messend verfolgt wird, bei der die Messung des Akoholanteils des zugeführten Kraftstoffs zur Einstellung der zugeführten Kraftstoffmenge dient. Es handelt sich dabei um eine einfache, rein kapazitive Messung. Verunreinigte Mischungen zeigen jedoch einen starken Leitwerteinfluß, so daß dieses Verfahren im praktischen Betrieb unzureichend ist.

In der FR-A-1497457 (Diversy-France) ist vorgesehen, die Impedanzen einer unbekannten und einer bekannten Flüssigkeit miteinander zu vergleichen. Dabei wird die Möglichkeit erwähnt, aufgrund einer Ungleichheit der Impedanzen, die zu einer Spannungsdifferenz an einer Wheatstoneschen Brückenschaltung führen, Flüssigkeitskonzentrationen zu bestimmen. Bei der Messung von Alkoholkonzentrationen im Kraftstoff stellt sich jedoch als Problem dar, daß zwei Mischungen mit der gleichen Alkoholkonzentration erheblich unterschiedliche Impedanzen aufweisen können, insbesondere dann, wenn z.B. die Referenzflüssigkeit aus einigermaßen reinen Substanzen besteht und die "unbekannte" Flüssigkeit mit Verunreinigungen wie Ameisensäure oder Wasser behaftet ist, was im realistischen Fahrzeugbetrieb häufig vorkommt.

Der Erfindung liegt die Aufgabe zugrunde, eine Einrichtung zum Betrieb einer Brennkraftmaschine der eingangs beschriebenen Art zu schaffen, die bei hoher Betriebssicherheit und Wirtschaftlichkeit apparate- und schaltungstechnisch in einfacher Weise realisierbar ist.

Gemäß der Erfindung ist eine Vorrichtung zum Betrieb einer Brennkraftmaschine vorgesehen, die mit einem nachfolgend als Alkohol bezeichneten Alternativkraftstoff enthaltenden Kraftstoff herkömmlicher Art angetrieben wird, dessen Alkoholanteil zum Zweck der Einstellung der jeweils zuzuführenden Kraftstoffmenge messend verfolgt wird, bei der die Messung des Alkoholanteils des zugeführten Kraftstoffs zur Vorsteuerung der zugeführten Kraftstoffmenge dient, während die Feinregulierung des Luftverhältnisses über eine Lambdaregelung bekannter Art erfolgt, bei der der Alkoholgehalt des Kraftstoffs durch Messung der Kapazität einer in einer Meßzelle untergebrachten Kraftstoffmenge in einer gemeinsamen Schaltung bestimmt wird, und bei der die gemeinsame Schaltung schwingungsfähig ist und ihre Ausgangsfrequenz ein Maß der Kapazität und des Leitwertes ist, wobei die Kraftstoffmenge in der Meßzelle oder ein Teil davon das Dielektrikum des kapazitiven Teils der Schaltung bildet.

Die gemeinsame Schaltung kann eine Kippschaltung sein, in der die Kraftstoffmenge in der Meßzelle oder ein Teil davon das Dielektrikum des frequenzbestimmenden Kondensators bildet. Die Frequenz der Kippschaltung kann dabei zur Bestimmung der Kapazität der Schaltung ausgewertet werden.

Besondere Vorteile sind erreichbar, wenn das Tastverhältnis oder einer der beiden Schaltzustände der Kippschaltung zur Bestimmung des Leitwerts der Schaltung ausgewertet wird.

Gemäß einer weiteren bevorzugten Ausgführungsform ist vorgesehen, daß von der Auswertung des Meßsignals eine Vorverarbeitung dadurch erfolgt, daß das Signal durch eine Integration in eine dem Tastverhältnis entsprechende Spannung umgesetzt wird.

Auch kann es zweckmäßig sein, daß vor der Auswertung des Meßsignals eine Vorverarbeitung dadurch erfolgt, daß während der Phase mit hohem Potential ein Zähler ein externes höherfrequentes Signal hoch zählt und während der Phase mit niedrigem Potential abwärts zählt, derart, daß der Zählerstand am Ende der Periode ein Maß für das Tastverhältnis darstellt.

Die Meßwerte können einerseits an der wenigstens teilweise leitfähigen Wandung der Meßzelle, die die erste Elektrode darstellt, und andererseits an einem wenigstens teilweise leitfähigen Strömungskörper, der die zweite Elektrode darstellt, abgegriffen werden.

Konstruktiv und schaltungstechnisch günstig ist es, wenn die gemeinsame Schaltung und/oder die Auswertung der Meßsignale in das Kraftstoffzumeßsystem schaltungs- und/oder programmtechnisch integriert werden.

Gemäß einer weiteren bevorzugten Ausführungsform ist vorgesehen, daß die Meßzelle als frequenzbestimmendes Glied in einem Generator verwendet wird, dessen Frequenz durch die Parallelschaltung eines bekannten Kondensators geändert wird, wobei die beiden unterschiedlichen Frequenzen zur rechnerischen oder schaltungstechnischen Bestimmung der Kapazität ausgewertet werden. Die Frequenzänderung kann auch durch eine schaltbare Verzögerung erreicht werden.

Hinsichtlich weiterer vorteilhafter Merkmale der Erfindung wird auf die Zeichnungen und die nachfolgende Beschreibung Bezug genommen.

Ausführungsbeispiele der Erfindung werden anhand der Zeichnungen beschrieben.

Fig. 1 zeigt im Diagramm die Dielektrizitätszahl als Funktion des Leitwertes G in Abhängigkeit von dem Wassergehalt und dem Methanolgehalt des Kraftstoffs.

Fig. 2 zeigt ein bevorzugtes Beispiel einer Meßzelle zur Ausführung des Verfahrens gemäß der Erfindung.

Fig. 3 zeigt schematisch eine Anordnung zur Anwendung des Verfahrens zur Steuerung bzw. Regelung einer Brennkraftmaschine.

Fig. 4 zeigt eine Kippschaltung als bevorzugtes Ausführungsbeispiel einer Schaltung zur Ausführung des Verfahrens.

Fig. 5 zeigt schematisch eine Anordnung zur Frequenzänderung durch eine schaltbare Verzögerung.

Fig. 6 zeigt schematisch eine Anordnung zur Frequenzänderung durch die Parallelschaltung eines bekannten Kondensators.

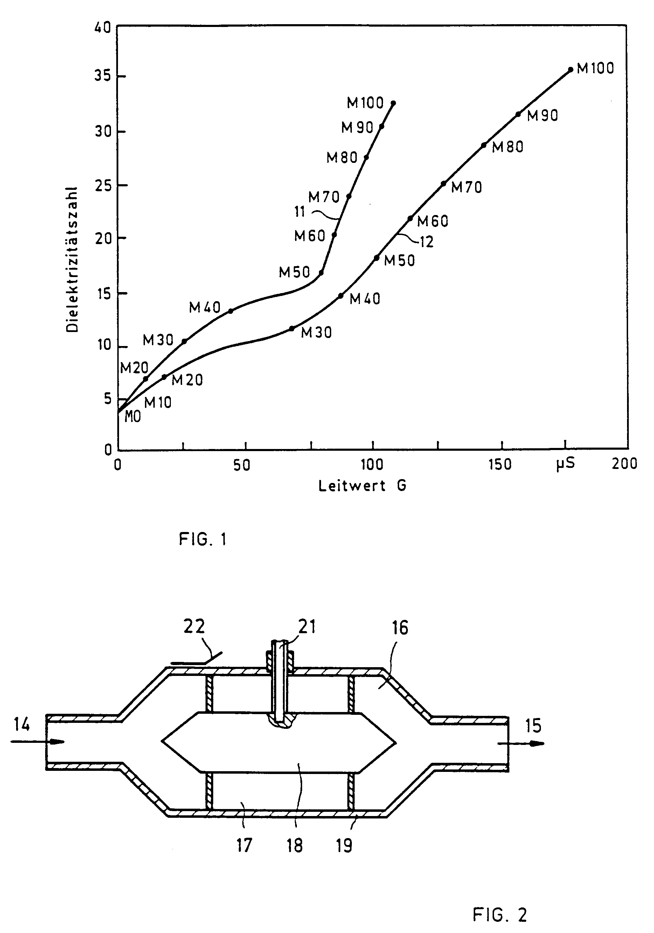

In der Darstellung gemäß Fig. 1 sind die Werte der Dielektrizitätsmessung in der Ordinate und die Leitwerte G in der Abszisse aufgetragen. Linienzug 11 zeigt die Abhängigkeit der Werte der Dielektrizitätsmessung von dem Anteil der Methanolbeimischung bei einem Wasseranteil von 0% im Kraftstoff, während Linienzug 12 die entsprechenden Werte bei einem Anteil von 2,5% $H_2O$ darstellt. Auf den Linienzügen sind die jeweiligen Meßpunkte für variable Methanolanteile von 0% bis 100% (MO bis M100) aufgetragen.

Man erkennt, daß bei höheren Wasseranteilen bestimmte Dielektrizitätswerte bei höheren Leitfähigkeiten gemessen werden. Empirisch ermittelte Kurvenscharen der in Fig. 1 dargestellten Art ermöglichen bei einer kombinierten Messung von Leitfähigkeit und Dielektrizitätszahl eine Korrektur der Dielektrizitätsmessung durch die Leitwertbestimmung.

Durch die Kenntnis des Leitwertes können nun die Quereinflüsse auf die Kapazität durch Verunreinigungen des Kraftstoffes auskorrigiert werden. Wie Fig. 1 zeigt, wirkt beispielsweise ein höherer Wasseranteil im Kraftstoff kapazitätserhöhend. Durch Messung des Leitwerts kann diese Erhöhung der Kapazität bei der Bestimmung des Alkoholanteils berücksichtigt werden.

Fig. 2 zeigt eine bevorzugte Ausführungsform einer Meßzelle zur Ausführung des Verfahrens gemäß der Erfindung. In die Meßzelle gelangt der Kraftstoff über Zufluß 14, und er verläßt die Meßzelle über Abfluß 15. Der Kraftstoffstrom teilt sich in der flächenhaften Darstellung der Fig. 2 auf in Strömungswege 16 und 17, die durch einen Mittelzylinder 18 gebildet werden. Wenn der Mittelzylinder 18 und der Außenmantel 19 ganz oder teilweise elektrisch leitend sind, können diese Wandungen bzw. Wandungsteile der Meßzelle die Elektroden einer Meß- bzw. Auswerteschaltung darstellen. Innerhalb der wenigstens teilweise leitfähigen Wandung der Meßzelle, die die erste Elektrode darstellt, ist dann der wenigstens teilweise leitfähige Mittelzylinder 18 als Strömungskörper die zweite Elektrode.

Der Mittelzylinder 18 bildet zusammen mit dem Außenmantel 19 den eigentlichen Meßkondensator, der das Meßvolumen umschließt. An Anschlüssen 21 und 22 können die entsprechenden Werte abgegriffen werden, und zwar sowohl für die Kapazität als auch für den Leitwert an denselben Elektroden. Die abgegriffenen Werte werden dann zur weiteren Verarbeitung in die gemeinsame Schaltung eingegeben.

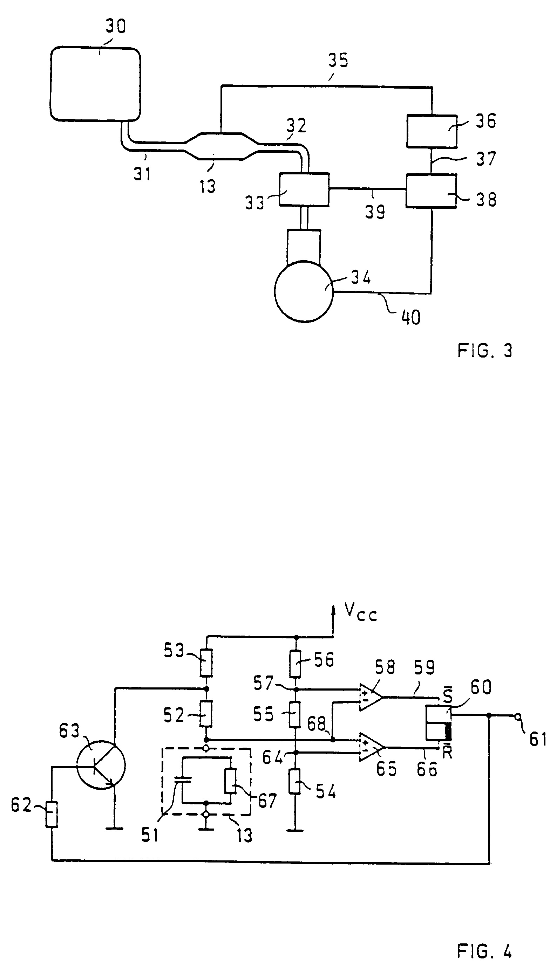

Wie aus der schematischen Darstellung der Fig. 3 hervorgeht, gelangt mit Alkoholanteilen gemischter Kraftstoff aus Kraftstofftank 30 über eine Leitung 31 zur Meßzelle 13 und von dort über eine Leitung 32 zu einer Zumeßeinrichtung 33, die im Regelfall eine Einspritzpumpe mit entsprechenden Einspritzdüsen ist. Der Kraftstoff wird in direkter oder indirekter Einspritzung der Verbrennung in Motor 34 zugeführt.

Die in der Meßzelle 13 abgegriffenen Werte der Kapazität und des Leitwertes werden über Meßleitung 35 einer gemeinsamen Auswerteschaltung oder Auswerteeinheit 36 zugeführt. Vorzugsweise ist die gemeinsame Schaltung 36 schwingungsfähig, und ihre Ausgangsfrequenz kann dann als Maß der Kapazität ausgewertet werden. In dieser schwingungsfähigen gemeinsamen Schaltung 36 ist die Kraftstoffmenge in Meßzelle 13 oder ein Teil davon das Dielektrikum des kapazitiven Teils der Auswerteschaltung 36.

Die von der Auswerteschaltung 36 abgegebenen Signale gelangen über eine Leitung 37 zu einem Einspritzrechner 38, und dieser steuert über eine Leitung 39 die Zumeßeinrichtung 33.

Der jeweils in der Meßzelle 13 gemessene und in der Auswerteeinheit 36 ausgewertete Mischungsanteil wird also betrieblich nicht verändert, sondern es wird vielmehr die Art der Einspritzung je nach den gemessenen und ausgewerteten Werten geändert.

Ein wesentliches Merkmal ist dabei, daß die Messung des Alkoholanteils des zugeführten Kraftstoffs zur Vorsteuerung der Einspritzmenge dient, während die Feinregelung des Luftverhältnisses durch Verbindung 40 über eine Lambdaregelung bekannter Art erfolgt. Hierdurch wird eine hohe Betriebssicherheit und Wirtschaftlichkeit des Betriebes der Brennkraftmaschine erreicht, und zwar apparatetechnisch und schaltungstechnisch in besonders einfacher Weise.

Insbesondere bei Kraftfahrzeugmotoren kann es dabei zweckmäßig sein, daß bei der Anwendung des Verfahrens gemäß der Erfindung auf Einspritzbrennkraftmaschinen die gemeinsame Schaltung als Auswerteeinheit in das Einspritzsystem schaltungs- und programmtechnisch integriert wird. Darüber hinaus kann zusätzlich die Temperatur des in der Meßzelle 13 befindlichen Kraftstoffs festgestellt und in die Auswerteeinheit zur Kompensation des Temperatureinflusses eingegeben werden.

Besondere Vorteile sind erreichbar, wenn die gemeinsame Schaltung eine Kippschaltung ist, in der die Kraftstoffmenge in der Meßzelle das Dielektrikum des frequenzbestimmenden Kondensators bildet. Dabei wird vorzugsweise die Frequenz der Kippschaltung zur Bestimmung der Kapazität ausgewertet, während das Tastverhältnis - also das Verhältnis von Impulsdauer zur Periodendauer - der Kippschaltung zur Bestimmung des Leitwerts ausgewertet werden kann. Dadurch wird der Effekt genützt, daß eine Kapazitätsänderung des frequenzbestimmenden Kondensators einer Kippschaltung gleichermaßen die Ladezeit wie auch die Entladezeit des Kondensators ändert, und daß eine Änderung des Leitwerts parallel zum Kondensator hingegen die Ladezeit und die Entladezeit gegensinnig verändert und damit auch das Tastverhältnis geändert wird.

Somit stellt das Tastverhältnis bei gegebener Kapazität ein Maß für die Leitfähigkeit und die Frequenz bzw. die Periodendauer des Signals ein Maß für die Kapazität mit einem Quereinfluß zum Leitwert hin dar. Dieser Quereinfluß kann in einer zusätzlichen Schaltung oder Schaltungskomponente kompensiert werden, z.B. empirisch, rechnerisch oder schaltungstechnisch.

Eine bevorzugte Ausführungsform einer Kippschaltung der erwähnten Art ist in Fig. 4 dargestellt. Die Kapazität 51 der Meßzelle 13 wird über Widerstände 52 und 53 von der Speisespannung $V_{cc}$ so lange aufgeladen, bis eine Schwellenspannung U1, die durch Widerstände 54, 55 und 56 an Punkt 57 gebildet wird, an Komparator 58 überschritten wird. Komparatorausgang 59 geht dann von "High"-auf "Low-Pegel" über und setzt Flip-Flop 60, dessen Ausgang 61 somit auf "High-Pegel" schaltet. Über Widerstand 62 wird nun ein Transistor 63 eingeschaltet, der den Entladevorgang der Kapazität 51 über den Widerstand 52 einleitet. Wenn nun die Spannung an der Kapazität 51 unter einen Schwellenwert U2 sinkt, der durch die Widerstände 54, 55 und 56 an Punkt 64 gebildet wird, so schaltet ein Komparator 65 seinen Ausgang 66 von "High"- auf "Low-Pegel". Dadurch wird Flip-Flop 60 zurückgesetzt; der Transistor 63 schaltet in den hochohmigen Zustand, und die Kapazität 51 wird erneut geladen.

Um eine sichere Funktion der in Fig. 4 dargestellten Schaltung auch bei großen Leitwerten zu erreichen, kann beispielsweise zwischen den Widerstand 52 und die Kapazität 51 mit Leitwertfunktion 67 der Meßzelle 13 eine Koppelkapazität zur Gleichstromunterdrükkung eingebaut werden, wobei der Anschluß 68 zu den Komparatoren 58 und 65 zwischen Widerstand 52 und der Koppelkapazität liegen muß.

Weitere vorteilhafte Möglichkeiten stehen zur Verfügung, wenn vor der Auswertung des Meßsignals eine Vorverarbeitung erfolgt, beispielsweise dadurch, daß das Signal zur Bestimmung der Frequenz zunächst eine Teilerstufe durchläuft. Dies ist besonders dann zweckmäßig, wenn die gemessenen Frequenzen im Megahertzbereich liegen, während die zur Auswertung verfügbare Vergleichsfrequenz wesentlich niedriger sein kann.

Auch kann vor der Auswertung des Meßsignals eine Vorverarbeitung dadurch erfolgen, daß das Signal durch eine Integration in eine dem Tastverhältnis entsprechende Spannung umgesetzt wird, da das Tastverhältnis von Signalen sehr hoher Frequenz, insbesondere im Megahertzbereich, durch eine nachgeschaltete Auswerteeinheit häufig schwierig zu bestimmen ist. Insbesondere wird durch diese Maßnahme die Auswertung durch einen Mikroprozessor erleichtert.

Schließlich kann es auch zweckmäßig sein, daß vor der Auswertung des Meßsignals eine Vorverarbeitung dadurch erfolgt, daß während der Phase mit hohem Potential ("High-Phase") der Kippschaltung ein Zähler ein externes höherfrequentes Signal hoch zählt und während der Phase mit niedrigem Potential ("Low-Phase") abwärts zählt, derart, daß der Zählerstand am Ende der Periode ein Maß für das Tastverhältnis darstellt. Hierbei sind bei übersichtlichen Schaltverhältnissen hohe Genauigkeiten erreichbar.

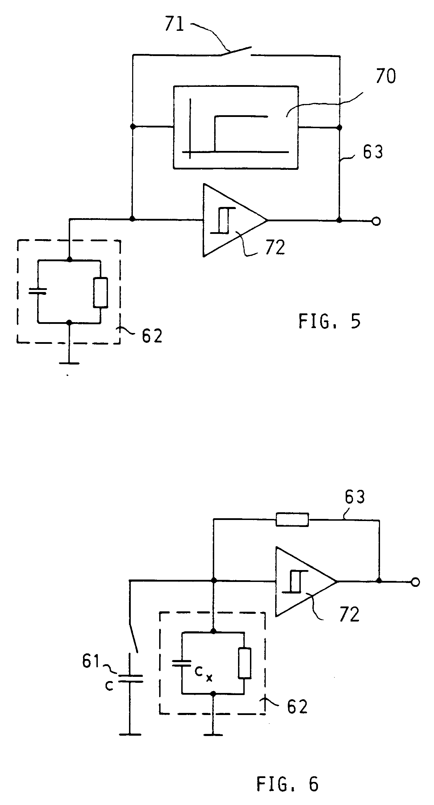

Gemäß Fig. 6 wird in einer der bevorzugten Ausführungsformen die Messung in 2 Phasen durchgeführt, wobei bei der zweiten Messung eine definierte Kapazität C 61 zur Meßzellenkapazität Cx 62 parallel geschaltet wird. Man erhält so zwei unterschiedliche Frequenzen, deren Auswertung eine Aussage über die Kapazität liefert. Im einfachsten Fall ergibt sich die Formel:

$$\frac{f2}{f1} = \frac{Cx}{Cx + C}$$

Besondere Vorteile hinsichtlich der Serienfertigung ergeben sich, wenn anstelle der geschalteten Kapazität eine schaltbare Verzögerung beispielsweise in den Rückkopplungszweig 63 eingefügt wird, wie Fig. 5 zeigt.

Diese wirkt wie eine Parallelschaltung der Kapazität frequenzerniedrigend, so daß somit eine gleichartige Auswertung der Frequenzen erfolgen kann. Im Rückkopplungszweig 63 befindet sich ein Verzögerungsglied 70, durch das eine Verzögerung definierter Länge bewirkt werden kann. Wenn Schalter 71 geschlossen ist, ist das Verzögerungsglied 70 abgeschaltet, während es bei Öffnung des Schalters 71 wieder aktiviert wird. Durch Schmidt-Trigger 72 werden zwei Schwellwerte der Kondensatorspannung überwacht, so daß der Kondensator ständig geladen und entladen wird.

Die Erfindung ist nicht auf Gemische aus Alkohol mit konventionellen Vergaserkraftstoffen beschränkt, sondern sie ist auch anwendbar auf Kraftstoffmischungen anderer Art, deren Komponenten unterschiedlichen stöchiometrischen Luftbedarf bzw. unterschiedliche Heizwerte haben.

## Patentansprüche

1. Verfahren zum Betrieb einer Brennkraftmaschine, die mit einem nachfolgend als Alkohol bezeichneten Alternativkraftstsoff enthaltenden Kraftstoff herkömmlicher Art angetrieben wird, dessen Alkoholanteil zum Zweck der Einstellung der jeweils zuzuführenden Kraftstoffmenge messend verfolgt wird, der Alkoholanteil des eine Meßzelle durchströmenden Kraftstoffs durch eine Kapazitätsmessung bestimmt wird und zur Vorsteuerung der zugeführten Kraftstoffmenge dient, während die Feinregulierung des Luftverhältnisses über eine Lambdaregelung bekannter Art erfolgt, dadurch gekennzeichnet, daß zusätzlich zu der Kapazitätsmessung der Leitwert des die Meßzelle durchströmenden Kraftstoffs gemessen und die Messung in einer gemeinsamen Schaltung zur Bestimmung des Alkoholanteils ausgewertet wird und hierdurch die Quereinflüsse von Verunreinigungen des zu messenden Kraftstoffes auf die Kapazität mit Hilfe der Leitwertmessung auskorrigiert werden.

2. Verfahren nach Anspruch 1, dadurch gekennzeichnet, daß die gemeinsame Schaltung schwingungsfähig ist und ihre Ausgangsfrequenz als Maß der Kapazität ausgewertet wird, wobei die Kraftstoffmenge in der Meßzelle oder ein Teil davon das Dielektrikum des kapazitiven Teils der Schaltung bildet.

3. Verfahren nach Anspruch 1, dadurch gekennzeichnet, daß die gemeinsame Schaltung eine Kippschaltung ist, in der die Kraftstoffmenge in der Meßzelle oder ein Teil davon das Dielektrikum des frequenzbestimmenden Kondensators bildet.

4. Verfahren nach Anspruch 3, dadurch gekennzeichnet, daß die Frequenz der Kippschaltung zur Bestimmung der Kapazität der Schaltung ausgewertet wird.

5. Verfahren nach Anspruch 3 oder 4, dadurch gekennzeichnet, daß das Tastverhältnis oder einer der beiden Schaltzustände der Kippschaltung zur Bestimmung des Leitwerts der Schaltung ausgewertet wird.

6.  Verfahren nach Anspruch 5, dadurch gekennzeichnet, daß vor der Auswertung des Meßsignals eine Vorverarbeitung dadurch erfolgt, daß das Signal durch eine Integration in eine dem Tastverhältnis entsprechende Spannung umgesetzt wird.

7.  Verfahren nach Anspruch 5, dadurch gekennzeichnet, daß vor der Auswertung des Meßsignals eine Vorverarbeitung dadurch erfolgt, daß während der Phase mit hohem Potential ein Zähler ein externes höherfrequentes Signal hoch zählt und während der Phase mit niedrigem Potential abwärts zählt, derart, daß der Zählerstand am Ende der Periode ein Maß für das Tastverhältnis darstellt.

8.  Verfahren nach einem der Ansprüche 1 bis 7, dadurch gekennzeichnet, daß die Meßwerte einerseits an der wenigstens teilweise leitfähigen Wandung der Meßzelle, die die erste Elektrode darstellt, und andererseits an einem wenigstens teilweise leitfähigen Strömungskörper, der die zweite Elektrode darstellt, abgegriffen werden.

9.  Verfahren nach einem der Ansprüche 1 bis 8, dadurch gekennzeichnet, daß die gemeinsame Schaltung und/oder die Auswertung der Meßsignale in das Kraftstoffzumeßsystem schaltungs- und/oder programmtechnisch integriert werden.

10. Verfahren nach Anspruch 1, dadurch gekennzeichnet, daß die Meßzelle als frequenzbestimmendes Glied in einem Generator verwendet wird, dessen Frequenz durch die Parallelschaltung eines bekannten Kondensators geändert wird, wobei die beiden unterschiedlichen Frequenzen zur rechnerischen oder schaltungstechnischen Bestimmung der Kapazität ausgewertet werden.

11. Verfahren nach Anspruch 10, dadurch gekennzeichnet, daß die Frequenzänderung durch eine schaltbare Verzögerung erreicht wird.

## Claims

1.  A method of operating an internal combustion engine which is driven with a fuel of conventional type which contains alternative fuel designated hereinunder as alcohol and the alcohol content of which is tracked by measurement for the purpose of adjusting the amount of fuel respectively to be supplied, the alcohol content of the fuel flowing through a measuring cell is determined by a capacitance measurement and serves for the pre-control of the amount of fuel supplied, while the fine adjustment of the air ratio is effected by way of a Lambda adjustment of known type, characterised in that in addition to the capacitance measurement the conductance of the fuel flowing through the measuring cell is measured and the measurement is evaluated in a common circuit to determine the alcohol content and in this way the cross-effects which impurities of the fuel that is to be measured have on the capacitance are corrected out with the aid of the conductance measurement.

2.  A method according to claim 1, characterised in that the common circuit is oscillatory and its output frequency is evaluated as a measure of the capacitance, the amount of fuel in the measuring cell or a part thereof forming the dielectric of the capacitive part of the circuit.

3.  A method according to claim 1, characterised in that the common circuit is a flip-clop circuit in which the amount of fuel in the measuring cell or a part thereof forms the dielectric of the frequency-determining capacitor.

4.  A method according to claim 3, characterised in that the frequency of the flip-flop circuit is evaluated to determine the capacitance of the circuit.

5.  A method according to claim 3 or 4, characterised in that the duty cycle or one of the two switching states of the flip-flop circuits is evaluated to determine the conductance of the circuit.

6.  A method according to claim 5, characterised in that prior to the evaluation of the measuring signal a preprocessing is effected in that the signal is converted by an integration into a voltage corresponding to the duty cycle.

7.  A method according to claim 5, characterised in that prior to the evaluation of the measuring signal a preprocessing is effected in that during the phase having high potential a counter counts upwards an external higher-frequency signal and during the phase having low potential counts it downwards, in such a way that the counter state at the end of the period represents a measure of the duty cycle.

8. A method according to any one of claims 1 to 7, characterised in that the measured values are tapped on the one hand at the at least partially conductive wall of the measuring cell which represents the first electrode, and on the other hand at an at least partially conductive flow body which represents the second electrode.

9. A method according to any one of claims 1 to 8, characterised in that the common circuit and/or the evaluation of the measuring signals are integrated circuitwise and/or programwise into the fuel proportioning system.

10. A method according to claim 1, characterised in that the measuring cell is used as a frequency-determining member in a generator, the frequency of which is changed by the parallel connection of a known capacitor, the two different frequencies being evaluated for the arithmetical or circuitwise determination of the capacitance.

11. A method according to claim 10, characterised in that the frequency change is achieved by a switchable delay.

**Revendications**

1. Méthode de fonctionnement d'un moteur à combustion qui fonctionne à carburant de type traditionnel contenant du carburant alternatif, appelé ci-après alcool, dont la teneur en alcool est suivie par mesure afin de régler la quantité de carburant à fournir selon le cas, la teneur en alcool du carburant qui traverse une cellule de mesure étant déterminée par une mesure de capacité et servant au préréglage de la quantité de carburant à fournir, tandis que le réglage fin du rapport d'air se fait par une régulation Lambda de type connu, caractérisée en ce que, en plus de la mesure de capacité, on mesure la conductivité du carburant traversant la cellule de mesure et que la valeur de mesure est évaluée dans un circuit commun, afin de déterminer la teneur en alcool, et que les influences négatives des impuretés du carburant à mesurer sur la capacité sont ainsi corrigées à l'aide de la mesure de conductivité.

2. Méthode suivant la revendication 1, caractérisée en ce que le circuit commun est susceptible d'osciller et que sa fréquence de sortie est exploitée comme mesure de la capacité, la quantité de carburant dans la cellule de mesure, ou une partie de celle-ci, constituant le diélectrique de l'élément capacitif du circuit.

3. Méthode suivant la revendication 1, caractérisée en ce que le circuit commun est un multivibrateur dans lequel la quantité de carburant dans la cellule de mesure, ou une partie de celle-ci, constitue le diélectrique du condensateur déterminant la fréquence.

4. Méthode suivant la revendication 3, caractérisée en ce que la fréquence du multivibrateur est exploitée pour déterminer la capacité du circuit.

5. Méthode suivant la revendication 3 ou 4, caractérisée en ce que le rapport d'impulsions ou l'un des deux états de commutation du multivibrateur est exploité pour déterminer la conductivité du circuit.

6. Méthode suivant la revendication 5, caractérisée en ce qu'avant l'exploitation du signal de mesure a lieu un prétraitement qui consiste en ce que le signal est converti par une intégration en une tension correspondant au rapport d'impulsions.

7. Méthode suivant la revendication 5, caractérisée en ce qu'avant l'exploitation du signal de mesure a lieu un prétraitement qui consiste en ce qu'un compteur compte un signal externe à fréquence plus élevée pendant la phase à potentiel élevé et le décompte pendant la phase à potentiel faible, de manière qu'à la fin de la période, la position du compteur représente une mesure du rapport d'impulsions.

8. Méthode suivant l'une des revendications 1 à 7, caractérisée en ce que les valeurs de mesure sont prises, d'une part, à la paroi au moins partiellement conductrice de la cellule de mesure qui représente la première électrode, et, d'autre part, à un corps au moins partiellement conducteur, situé dans l'écoulement qui représente la seconde électrode.

9. Méthode suivant l'une des revendications 1 à 8, caractérisée en ce que le circuit commun et/ou l'exploitation des signaux de mesure sont intégrés dans le système de mesure de carburant, selon une technique de circuits et/ou de programmation.

10. Méthode suivant la revendication 1, caractérisée en ce que la cellule de mesure est utilisée comme élément de détermination de la fréquence dans un générateur dont la fréquence est modifiée par la commutation en parallèle d'un condensateur connu, les deux fréquences différentes étant exploitées pour la détermination de la capacité par ordinateur ou par une technique de circuits.

11. Méthode suivant la revendication 10, caractérisée en ce que la modification de la fréquence est obtenue par une temporisation commutable.

FIG. 1

FIG. 2

FIG. 3

FIG. 4

FIG. 5

FIG. 6